(19) Europäisches Patentamt
European Patent Office
Office européen des brevets

(11) EP 4 198 067 A1

# (12) EUROPEAN PATENT APPLICATION

published in accordance with Art. 153(4) EPC

(43) Date of publication:
**21.06.2023 Bulletin 2023/25**

(21) Application number: **21855979.7**

(22) Date of filing: **11.08.2021**

(51) International Patent Classification (IPC):
***C08F 261/04*** (2006.01) ***C08L 29/04*** (2006.01)
***C08L 33/02*** (2006.01) ***C08L 33/20*** (2006.01)
***C08L 51/06*** (2006.01) ***H01M 4/13*** (2010.01)
***H01M 4/131*** (2010.01) ***H01M 4/139*** (2010.01)
***H01M 4/1391*** (2010.01) ***H01M 4/505*** (2010.01)
***H01M 4/525*** (2010.01) ***H01M 4/62*** (2006.01)
***H01M 4/64*** (2006.01) ***H01M 4/66*** (2006.01)

(52) Cooperative Patent Classification (CPC):
**C08F 261/04; C08L 29/04; C08L 33/02; C08L 33/20; C08L 51/06; H01M 4/13; H01M 4/131; H01M 4/139; H01M 4/1391; H01M 4/505; H01M 4/525; H01M 4/62; H01M 4/64; H01M 4/66;**
Y02E 60/10

(86) International application number:
**PCT/JP2021/029650**

(87) International publication number:
**WO 2022/034900 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.08.2020 JP 2020136306**

(71) Applicant: **Denka Company Limited**
**Tokyo 103-8338 (JP)**

(72) Inventors:
- **KANTO, Ryosuke**
  **Tokyo 103-8338 (JP)**
- **ISHIGAKI, Yuhei**
  **Tokyo 103-8338 (JP)**
- **WATANABE, Jun**
  **Tokyo 103-8338 (JP)**

(74) Representative: **Gulde & Partner**
**Patent- und Rechtsanwaltskanzlei mbB**
**Wallstraße 58/59**
**10179 Berlin (DE)**

# (54) COMPOSITION, POSITIVE ELECTRODE COMPOSITION, POSITIVE ELECTRODE SLURRY, POSITIVE ELECTRODE, AND SECONDARY BATTERY

(57) A composition, serving as a binder with a good balance between suppression of battery performance degradation at a high-capacity electrode, high-temperature storage property, and DC resistance, a slurry for a positive electrode using the composition, a positive electrode, and a secondary battery is provided.

According to the present invention, a composition comprising a graft copolymer, wherein:
the graft copolymer has a stem polymer and a branch polymer; the stem polymer contains a polyvinyl alcohol structure, the branch polymer contains a first monomer unit containing a (meth)acrylonitrile monomer unit and/or a (meth)acrylic acid monomer; the composition has a gel fraction of 30% or more; the gel fraction is represented by following formula: the gel fraction % = A × 100/1; A g is an insoluble content left on a filter pater when 1 g of the composition is added to 300 ml of dimethyl sulfoxide to obtain a mixture and the mixture is stirred at 60°C for 15 hours and then filtered through the filter paper, which is a No. 5C filter paper as specified in JIS P 380 is provided.

EP 4 198 067 A1

## Description

### TECHNICAL FIELD

The present invention relates to a composition, a composition for a positive electrode, a slurry for a positive electrode, a positive electrode, and a secondary battery.

### BACKGROUND ART

In recent years, a secondary battery has been used as a power source for electronic devices such as notebook computers, mobile phones. Moreover, the development of hybrid vehicles and electric vehicles using secondary batteries is promoted to reduce the environmental load. Secondary batteries having high energy density, high voltage, and high durability are required for their power sources. Lithium ion secondary batteries are attracting attention as secondary batteries that can achieve high voltage and high energy density.

A lithium ion secondary battery is composed of a positive electrode, a negative electrode, an electrolyte, and a separator. The positive electrode is composed of a positive electrode active material, a conductive auxiliary agent, a metal foil, and a binder (Patent Literatures 1 to 3).

As a binder for a positive electrode for a lithium ion secondary battery, a binder (a graft copolymer), mainly composed of polyvinyl alcohol and polyacrylonitrile is disclosed (Patent Literature 4).

In addition, as a positive electrode binder for a lithium ion secondary battery, a composition comprising a graft copolymer obtained by graft copolymerizing monomers mainly containing of (meth)acrylonitrile and (meth)acrylic acid ester to a stem polymer having polyvinyl alcohol. (Patent Literature 5).

### CITATION LIST

### PATENT LITERATURE

Patent Literature 1 :JP-A-2013-98123
Patent Literature 2 :JP-A-2013-84351
Patent Literature 3 :JP-A-H6-172452
Patent Literature 4 :WO2015/053224
Patent Literature 5 :WO2018/230599

### SUMMARY OF INVENTION

### TECHNICAL PROBLEM

However, there has been a need to develop a composition that can produce a battery with a good balance between suppression of battery performance degradation at a high-capacity electrode, high-temperature storage property, and DC resistance, a slurry for a positive electrode using the composition, a positive electrode, and a secondary battery.

The present invention was made in consideration of such problems and provides a composition serving as a binder with a good balance between suppression of battery performance degradation at a high-capacity electrode, high-temperature storage property, and DC resistance, a slurry for a positive electrode using the composition, a positive electrode, and a secondary battery.

### SOLUTION TO PROBLEM

According to the present invention, a composition comprising a graft copolymer, wherein:

the graft copolymer has a stem polymer and a branch polymer;
the stem polymer contains a polyvinyl alcohol structure,
the branch polymer contains a first monomer unit containing a (meth)acrylonitrile monomer unit and/or a (meth)acrylic acid monomer;
the composition has a gel fraction of 30% or more;
the gel fraction is represented by following formula: the gel fraction % = A $\times$ 100/1;

A g is an insoluble content left on a filter pater when 1 g of the composition is added to 300 ml of dimethyl sulfoxide to obtain a mixture and the mixture is stirred at 60°C for 15 hours and then filtered through the filter paper, which is a No. 5C filter paper as specified in JIS P 3801 is provided.

The present inventors have made intensive studies and found that, by using a composition having a graft copolymer with a structure in which a first monomer unit, which is a (meth)acrylonitrile monomer unit and/or a (meth)acrylic acid monomer unit, is graft-copolymerized with respect to a stem polymer having a polyvinyl alcohol structure, and having a gel fraction within predetermined range, a binder with a good balance between suppression of battery performance degradation at a high-capacity electrode, high-temperature storage property, and DC resistance can be obtained, completing the present invention.

The following are examples of various embodiments of the present invention. The embodiments shown below can be combined with each other.

Preferably, the composition further comprises a free polymer;

the free polymer does not have a covalent bond with the graft copolymer; and
the free polymer includes at least a polymer containing a polyvinyl alcohol structure and/or a polymer containing the first monomer unit.

Preferably, the graft copolymer further includes a crosslinked portion derived from a crosslinking agent.

Preferably, the crosslinked portion includes an ether structure.

Preferably, the composition contains 0.2 to 10 parts by mass of a structure derived from the crosslinking agent with respect to 100 parts by mass of the composition.

Preferably, the composition has a swelling rate to an electrolytic solution of 90 to 230%; the swelling rate is a swelling rate after immersing the composition in the electrolytic solution at 25°C for 15 days; and the electrolytic solution is obtained by mixing ethylene carbonate and diethyl carbonate at a volume ratio of 1:2.

Preferably, a graft ratio of the graft copolymer is 40 to 3000%.

Preferably, a saponification degree of the polyvinyl alcohol structure in the composition is 60 to 100 mol%.

Preferably, wherein an average polymerization degree of the polyvinyl alcohol structure in the composition is 300 to 4000.

A composition for a positive electrode comprising the composition.

According to another aspect of the present invention, a slurry for the positive electrode comprising the composition for the positive electrode, a positive electrode active material, and a conductive auxiliary agent is provided.

Preferably, a solid content of the composition for the positive electrode is 1 to 20% by mass with respect to 100% by mass of a total solid content in the slurry for the positive electrode.

Preferably, the conductive auxiliary agent is at least one selected from a group consisting of fibrous carbon, carbon black, and carbon composite in which fibrous carbon and carbon black are interconnected.

According to another aspect of the present invention, a positive electrode comprising a metal foil and a coating film of the slurry for the positive electrode formed on the metal foil is provided.

According to another aspect of the present invention, a secondary battery comprising the positive electrode, wherein the secondary battery is at least one selected from a lithium ion secondary battery, a sodium ion secondary battery, a magnesium ion secondary battery, and a potassium ion secondary batter is provided.

Preferably, the positive electrode active material contains at least one selected from $LiNi_XMn_{(2-X)}O_4$ ($0<X<2$); $Li(Co_XNi_YMn_Z)O_2$ ($0<X<1$, $0<Y<1$, $0<Z<1$, and $X+Y+Z=1$); and $Li(Ni_XCo_YAl_Z)O_2$ ($0<X<1$, $0<Y<1$, $0<Z<1$, and $X+Y+Z=1$), and the secondary battery is a lithium ion secondary battery.

## EFFECTS OF INVENTION

The present invention provides a composition that serves as a binder with a good balance between suppression of battery performance degradation at a high-capacity electrode, high-temperature storage property, and DC resistance, a slurry for a positive electrode using the composition, a positive electrode, and a secondary battery.

## DESCRIPTION OF EMBODIMENTS

The following is an explanation of the embodiments of the present invention. The various features shown in the following embodiments can be combined with each other. In addition, the invention is independently established for each property.

1. Composition

The composition according to one embodiment of the present invention can be used as a composition for a positive electrode.

The composition for the positive electrode according to one embodiment of the present invention comprises the composition according to one embodiment of the present invention and preferably composes of the composition according to one embodiment of the present invention.

The composition according to one embodiment of the invention is a composition containing a graft copolymer, wherein the graft copolymer has a stem polymer and a branch polymer, preferably a stem polymer and a plurality of branch polymers. Hereinafter, the polymer may also be referred to as a copolymer.

1-1. Graft Copolymer

The graft copolymer of one embodiment of the invention is synthesized by graft-copolymerizing at least a first monomer the stem polymer. The branch polymer produced by the polymerization is grafted to the stem polymer, that is, covalently bonded to the stem polymer. In this step, an ungrafted stem polymer and a polymer containing the first monomer which is not grafted to the stem polymer, that is, which is not covalently bound to the graft copolymer, may be simultaneously generated as a free polymer. Thus, the composition of one embodiment of the present invention may comprise the graft copolymer and the free polymer.

The graft copolymer according to one embodiment of the invention can further include a crosslinked portion derived from a crosslinking agent. A crosslinked portion means a structure derived from a crosslinking agent that crosslinks the branch polymers, crosslinks the stem polymer and the branch polymer, or crosslinks the stem polymers. The graft copolymer according to one embodiment of the present invention can be obtained by graft copolymerizing at least the first monomer to the stem polymer and crosslinking either the stem polymer or the branch polymers with either the stem polymer or the branch polymers. In addition to the polymer containing the first monomer unit, the composition according to one embodiment of the invention can also contain a polymer containing the structure derived from the crosslinking agent as a free polymer.

The graft copolymer according to one embodiment of the present invention may contain a second monomer unit containing an ether structure and a monomer unit other than the first monomer unit and second monomer unit as long as the effect of the present invention is not impaired. The composition according to one embodiment of the present invention may also contain, as a free polymer, a polymer containing a polymer containing the second monomer unit and a polymer containing a monomer unit other than the first monomer unit and the second monomer unit.

The graft ratio of the graft copolymer is preferably 40 to 3000%, more preferably 150 to 900%. From the viewpoint of solubility, the graft ratio is preferably within the above range. When the grafting ratio is the lower limit or more, during making a slurry, the solubility in a solvent (for example, NMP (N-methyl-2-pyrrolidone)) is improved. When the grafting ratio is the upper limit or less, the viscosity of the slurry is reduced, and the fluidity of the slurry is improved.

1-2. Stem Polymer

The stem polymer has a polyvinyl alcohol structure. Here, the polyvinyl alcohol structure is derived from polyvinyl alcohol, for example, which is synthesized by polymerizing a vinyl acetate monomer to obtain polyvinyl acetate and saponifying the polyvinyl acetate. Preferably, the stem polymer is composed mainly of the polyvinyl alcohol structure. More preferably, the stem polymer is polyvinyl alcohol.

The average polymerization degree of the polyvinyl alcohol structure in the composition is preferably 300 to 4000, and more preferably 500 to 2000. When the average polymerization degree is in the above range, the stability of the slurry is particularly high. Furthermore, in terms of solubility, binding property, and viscosity of the binder, it is preferable to be in the above range. When the average polymerization degree is 300 or higher, the bonding between the binder and the active material and conductive auxiliary agent is improved, and durability is enhanced. When the average polymerization degree is 4000 or less, the solubility is improved and viscosity is reduced, making it easier to produce the slurry for the positive electrode. The average polymerization degree here is a value measured by the method according to JIS K 6726.

The saponification degree of the polyvinyl alcohol structure in the composition is preferably 60 to 100 mol%, and more preferably 80 to 100 mol%. When the saponification degree is in the above range, the stability of the slurry is particularly high. The saponification degree here is a value measured by the method according to JIS K 6726.

1-3. Branch Polymer

The branch polymer contains at least the first monomer unit. Further, the branch polymer may contain the

second monomer unit and a monomer unit other than the first monomer unit and the second monomer unit as long as the effect of the present invention is not impaired. Here, the first monomer unit and the second monomer unit are monomer units derived from the first monomer and the second monomer used in the synthesis of the graft copolymer, respectively.

1-4.Crosslinked Portion

The graft copolymer according to one embodiment of the present invention may further comprise a crosslinked portion. The crosslinked portion is a structure derived from a crosslinking agent and connects the branch polymers, the stem polymer and the branch polymer, or the stem polymers of the graft copolymer. The crosslinking agent preferably crosslinks the branch polymers of the graft copolymer. The crosslinked portion preferably contains an ether structure, more preferably an alkylene glycol repeating unit, and most preferably an ethylene glycol repeating unit.
The crosslinking agent according to one embodiment of the present invention is a bifunctional or multifunctional compound, preferably a compound soluble in a polar solvent, and preferably a compound soluble in the first monomer.
The crosslinking agent is not limited as long as the above requirement is met. Alkane polyol-poly(meth)acrylates such as ethylene glycol di(meth)acrylate, butylene glycol di(meth)acrylate, oligoethylene glycol di(meth)acrylate (poly(ethylene glycol di(meth)acrylate), trimethylolpropane di(meth)acrylate, trimethylolpropane tri(meth)acrylate, and divinylbenzene can be mentioned. Among these, oligoethylene glycol di(meth)acrylate is preferable.
Among oligoethylene glycol di(meth)acrylates, di(meth)acrylates represented by the following general formula (B) are preferable.

$$H_2C{=}CR^{21}\text{-}COO\text{-}(\text{-}CH_2CH_2O\text{-})_n\text{-}CO\text{-}CR^{22}{=}CH_2 \qquad \text{(B)}$$

In general formula (B), each of $R^{21}$ and $R^{22}$ is hydrogen (H) or methyl groups. $R^{21}$ and $R^{22}$ may be the same or different. n is a number greater than or equal to 0. n is preferably 1 or more. n is preferably 30 or less, and more preferably 10 or less.
The crosslinking agent preferably contains an ether structure, and more preferably an ethylene glycol repeating unit. The number of ethylene glycol repeating unit is preferably 2 to 20, more preferably 5 to 15. The number of ethylene glycol repeating unit may be 5, 6, 7, 8, 9, 10, 11, 12, 13, 14, 15, and may be within the range between any two of the numerical values exemplified here.
The graft copolymer according to one embodiment of the present invention can control the gel fraction of the composition by adjusting the kind and amount of the crosslinked portion.

1-4. Free Polymer

The composition according to one embodiment of the present invention may further contain a free polymer. The free polymer is a polymer not having have a covalent bond with the graft copolymer and contains at least one of a polymer having a polyvinyl alcohol structure and/or a polymer having the first monomer unit. The polymer having a polyvinyl alcohol structure mainly means the stem polymer which was not involved in the graft-copolymerization. The polymer having the first monomer unit means a homopolymer of the first monomer, a copolymer containing the first monomer unit and the second monomer unit, and a copolymer containing the first monomer unit and a monomer unit other than the first and second monomer unit, and a copolymer containing a structure derived from the first monomer and the crosslinking agent, which is not copolymerized to the graft copolymer (i.e., the stem polymer). In addition, as long as the effect of the present invention is not impaired, the free polymer may include a polymer having a polyvinyl alcohol structure, a polymer other than the polymer having the first monomer unit, for example, a homopolymer of the second monomer, a homopolymer of a monomer other than the first monomer and the second monomer and a polymer containing a structure derived from the crosslinking agent, which is not copolymerized to the graft copolymer (i.e., the stem polymer). The free polymer is preferably substantially a copolymer including the first monomer.
In addition, a weight average molecular weight of the free polymer other than the stem polymer, for example, including a homopolymer of the first monomer, is preferably 30,000 to 250,000, more preferably 40000 to 200,000, and more preferably 50000 to 150000. From the viewpoint of suppressing the increase in viscosity and easily producing the slurry for the positive electrode, the weight average molecular weight of the free polymer other than the stem polymer is preferably 300,000 or less, more preferably 200,000 or less, and even more preferably 1500,00 or less. The weight average molecular weight of the free polymer other than the stem polymer can be determined by GPC (gel permeation chromatography). Specifically, it can be measured by the method described below.

1-6. First Monomer Unit

The first monomer unit is a (meth) acrylonitrile monomer unit and/or a (meth) acrylic acid monomer unit. The

first monomer unit is more preferably a (meth) acrylonitrile monomer unit and is even more preferably an acrylonitrile monomer unit.

That is, the first monomer used to synthesize the graft copolymer is preferably (meth) acrylonitrile and/or (meth) acrylic acid, more preferably (meth) acrylonitrile, and even more preferably acrylonitrile. Thus, the first monomer unit has a structure derived from these.

1-7. Second Monomer Unit

The second monomer unit is a structure unit containing an ether structure and is derived from a second monomer that is monofunctional.

The second monomer unit is a monofunctional compound having the ether structure. The ether structure preferably has at least one of a linear polyether structure, a branched polyether structure, and a cyclic ether structure. More preferably, the ether structure has a polyethylene oxide structure.

The second monomer unit preferably has a structure derived from a monomer that is a (meth)acrylic ester derivative, a styrene derivative, a polysubstituted ethylene, or a vinylether derivative.

That is, the second monomer used in synthesizing the graft polymer is a monomer having an ether structure, preferably a (meth)acrylic ester derivative having an ether structure, a styrene derivative having an ether structure, a polysubstituted ethylene derivative having an ether structure, a vinylether derivatives having an ether structure or the like.

Among these, a (meth)acrylic ester derivatives having an ether structure is preferable. Among (meth)acrylic ester derivatives having an ether structure, (meth)acrylic ester derivatives represented by the following general formula (A) are preferable.

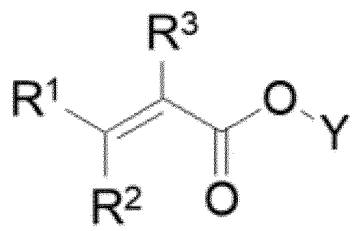

(A)

In general formula (A), Y is preferably $-(AO)_n-R$. AO is an oxyalkylene group. The number of carbon atoms of the oxyalkylene group is preferably 1 to 18, and more preferably 2 to 10. As the oxyalkylene group, one or more of an ethylene oxide group and a propylene oxide group are most preferable, and an ethylene oxide group is even more preferable. n is a number greater than 0. n is preferably 1 or more. n is preferably 30 or less, and more preferably 10 or less.

Each of $R^1$, $R^2$, $R^3$, and R is hydrogen (H), an optionally substituted hydrocarbon group, an optionally substituted ether group, or the like. Preferably, the optionally substituted hydrocarbon group and ether group has 1 to 20 carbon atoms. Here, the ether group is a functional group having an ether bond, such as an alkyl ether group. $R^1$, $R^2$, $R^3$, and R are preferably unsubstituted. $R^1$, $R^2$, $R^3$, and R may be the same or different. R is preferably a hydrocarbon group. As the hydrocarbon group, one or more of a methyl group and an ethyl group are preferable.

As the (meth)acrylic acid ester derivative, alkoxypolyalkylene glycol (meth)acrylate is preferable. Among the alkoxypolyalkylene glycol (meth)acrylates, one or more of alkoxypolyethyleneglycol (meth)acrylate and alkoxypolypropyleneglycol (meth)acrylate are preferable. More specifically, one of (2-(2-ethoxy)ethoxy)ethyl (meth)acrylate, methoxypolyethylene glycol (meth)acrylate (poly: n=23), and methoxydipropylene glycol (meth)acrylate is preferable. The second monomer is more preferably one or more of (2-(2-ethoxy)ethoxy)ethyl (meth)acrylate and methoxydipropylene glycol (meth)acrylate, and most preferably (2- (2-ethoxy)ethoxy)ethyl (meth)acrylate. Therefore, the second monomer unit has a structure derived from these.

1-8. Content of Each Component in Composition

Preferably, the following requirements are satisfied about the content of each component and the properties. When the content of each component and properties are in the following range, the composition that serves as a binder with a good balance between suppression of battery performance degradation at a high-capacity electrode, high-temperature storage property (high-temperature preservation property), and DC resistance can be provided.

The content of the polyvinyl alcohol structure in the composition according to one embodiment of the present invention is preferably 5 to 70 parts by mass, more preferably 10 to 60 parts by mass, and even more preferably 15 to 55 parts by mass with respect to 100 parts by mass of the composition. The content of the polyvinyl alcohol structure

in the composition is, for example, 5, 10, 15, 20, 25, 30, 35, 40, 45, 50, 55, 60, 65, 70 parts by mass part and may be within the range between any two of the numerical values exemplified here. When the content is the above lower limit or more, the binder can have binding property, and when the content is the above upper limit or less, the oxidation resistance and flexibility can be maintained. In the present embodiment, the content of the polyvinyl alcohol structure in the composition means the total amount of the polyvinyl alcohol structure in the graft copolymer and the polyvinyl alcohol structure in the free polymer containing the polyvinyl alcohol included in the composition.

The content of the first monomer unit derived from the first monomer in the composition according to one embodiment of the present invention is preferably 3 to 80 parts by mass, and more preferably 5 to 70 parts by mass with respect to 100 parts by mass of the composition. The content of the first monomer unit in the composition is, for example, 3, 5, 10, 15, 20, 25, 30, 35, 40, 45, 50, 55, 60, 65, 70, 75, 80 parts by mass and may be within the range between any two of the numerical values exemplified here. When the content is the above lower limit or more, the binder can have binding property, and when the content is the above upper limit or less, the oxidation resistance and flexibility can be maintained. In the present embodiment, the content of the first monomer unit in the composition means the total amount of the first monomer unit in the graft copolymer and the first monomer unit in the free polymer containing the first monomer unit included in the composition.

The content of the structure derived from the crosslinking agent in the composition according to one embodiment of the present invention is preferably 0.2 to 10 parts by mass, more preferably 0.5 to 8 parts by mass, and even more preferably 1 to 5 parts by mass with respect to 100 parts by mass of the composition. The content of the structure derived from the crosslinking agent is, for example, 0.2, 0.5, 1, 2, 3, 4, 5, 6, 7, 8, 9, 10 parts by mass and may be within the range between any two of the numerical values exemplified here. When the content is the above lower limit or more, the composition can have an enough gel fraction. When the content is the above upper limit or less, the solubility in a solvent such as NMP can be sufficiently maintained. In the present embodiment, the content of the structure derived from a crosslinking agent in the composition means the total amount of the structure derived from the crosslinking agent bound to the graft copolymer and the structure derived from the crosslinking agent in the free polymer included in the composition.

The content of the second monomer unit derived from the second monomer in the composition according to one embodiment of the present invention is preferably 0 to 20 parts by mass, and more preferably 0 to 15 parts by mass with respect to 100 parts by mass of the composition. The content of the second monomer unit in the composition is, for example, 0, 2, 4, 6, 8, 10, 12, 14, 16, 18, 20 parts by mass and may be within the range between any two of the numerical values exemplified here. The composition according to one embodiment of the present invention may not include the second monomer unit. When the content of the second monomer unit is within the above range, the composition can have moderate gel fraction, and the binder can have moderate flexibility. In the present embodiment, the content of the second monomer unit in the composition means the total amount of the second monomer unit in the graft copolymer and the second monomer unit in the free polymer containing the second monomer unit included in the composition.

The total content of the structure derived from the crosslinking agent and the second monomer unit in the composition according to one embodiment of the present invention is preferably 0.1 to 20 parts by mass, and more preferably 0.1 to 15 parts by mass with respect to 100 parts by mass of the composition. The total content of the structure derived from the crosslinking agent and the second monomer unit is 0.1, 0.5, 1, 2, 3, 4, 5, 6, 7, 8, 9, 10, 11, 12, 13, 14, 15, 16, 17, 18, 19, 20 parts by mass and may be in the range between the two values exemplified herein. When the total content of the structure derived from the crosslinking agent and the second monomer unit is within the above range, the gel fraction can be controlled, and the binder can have moderate flexibility.

1-9. Properties of Composition

(DMSO Soluble Content (Gel Fraction))

The composition according to one embodiment of the invention have a gel fraction of 30% or more. In one embodiment, the gel fraction is preferably 50% or more, more preferably 60%, and even more preferably 65 % or more. The upper limit of the gel fraction can be, for example, 95%. The gel fraction can be, for example, 30, 40, 50, 60, 65, 70, 75, 80, 85, 90, 95%, and may be in the range between the two values exemplified herein.

The composition according to one embodiment of the present invention can moderately control the electrolytic solution that enters into the interior of the composition and maintain the pore volume by controlling the gel fraction within the above range, and, thereby, it can have good battery property and suppress a decrease in discharge capacity during high temperature storage.

As described below, the gel fraction of the composition is an index of the gel content contained in the composition. When the composition and DMSO are mixed, the composition is evaluated by the ratio of content that are insoluble in DMSO. The gel fraction is considered to be related to the kind and amount of each component contained in the composition, and the structure of the composition, specifically, the grafting ratio and the degree of crosslinking, for example, the gel fraction tends to increase as the crosslinked portions increases. Therefore, the gel fraction of the composition can be adjusted by controlling the content of PVA, the first monomer unit, second monomer unit and cross-linking agent and the structure of the composition, and specifically can be controlled by adjusting the balance of the types and blending amounts of the raw materials of the composition, the graft copolymerization conditions, and the like.

(Swelling Rate)

The composition according to one embodiment of the present invention preferably has a swelling rate of 90 to 230% at 25°C for 15 days with respect to an electrolytic solution, more preferably a swelling rate of 100 to 220%, and even more preferably a swelling rate of 105 to 210%. Here, the swelling rate at 25°C for 15 days with respect to an electrolytic solution means a swelling rate after immersing the composition in the electrolytic solution at 25°C for 15 days and the electrolytic solution is obtained by mixing ethylene carbonate and diethyl carbonate at a volume ratio of 1:2. The swelling rate to the electrolytic solution at 25°C for 15 days is 90, 95, 100, 105, 110, 115, 120, 125, 130, 135, 140, 150, 160, 170, 180, 190, 200, 210, 220, 230%, and may be in the range between the two values exemplified herein.

The composition according to one embodiment of the present invention can have moderate flexibility and maintain the pore volume, especially in the high-rate region, by controlling the swelling rate within the above range, and, thereby, it can have good battery property and suppress a decrease in discharge capacity during high temperature storage.

1-10. Each Measurement/Calculation Method

(DMSO Insoluble Content (Gel Fraction))

The gel fraction of the composition is evaluated by dissolving the composition in DMSO to obtain a mixture, stirring the mixture at a predetermined temperature and time, and evaluating the insoluble content in the mixture. Specifically, the gel fraction of the composition can be evaluated by the following method.

1 g of the obtained composition and 300 ml of DMSO are added to a 500 ml beaker and stirred at 60°C for 15 hours. After that, the obtained mixture is filtered through a filter paper, which is a No. 5C filter paper specified in JIS P 3801 (a retaining particle diameter of 1 μm), with a Kiriyama funnel. Here, the residue remaining on the filter paper is the insoluble portion (gel fraction), and the filtrate is the soluble portion. The insoluble portion (gel content) is vacuum-dried at 100°C for 24 hours and weighed. The gel fraction is calculated by following formula: the gel fraction (%) = $A \times 100/1$, where the insoluble content is A g.

(Swelling Rate of Composition (25°C, 15 days))

The swelling rate of the composition to the electrolytic solution indicates the change in mass before and after the film consisting of the composition is immersed in the electrolytic solution for a predetermined time and at a predetermined temperature. The swelling rate can be determined, for example, by the following method.

The obtained composition is dissolved in NMP to prepare a 4 mass% NMP solution. 5.6 g of the obtained solution is added to a Petri dish of PTFE (tetrafluoroethylene) and dried at 105°C for 8 hours with an air drier to obtain a film having a thickness of 250 μm. A central portion of the obtained film is cut into a 5 mm square to be used as a test film. The obtained test film is weighed, and then immersed in an electrolytic solution in which ethylene carbonate (EC) and diethyl carbonate (DEC) are mixed at a volume ratio of 1:2. After standing at 25°C for 15 days, the liquid on the surface of the film is wiped off, and the mass after immersion is measured. From the change in mass before and after immersion, the swelling rate is calculated using the following formula. The swelling rate is calculated from the following formula, where WA (g) is the mass before immersion and WB (g) is the mass after immersion.

$$\text{Swelling rate (25°C, 15 days) (\%)} = WB \times 100/WA \qquad \text{Formula (1)}$$

WA: Mass before immersion (g)
WB: Mass after immersion (g)

By changing the conditions of immersion in the electrolytic solution, the swelling rate under different conditions can be obtained. For example, by setting the immersion conditions in the electrolytic solution to 60°C for 48 hours, the swelling rate when immersed in the electrolytic solution at 60°C for 48 hours can be obtained, and the swelling rate can be evaluated in a short time.

(Content of Polyvinyl Alcohol Structure, First Monomer Unit, Second Monomer Unit, Structure Derived From Crosslinking Agent)

The composition according to one embodiment of the present invention comprises a component derived from PVA and a component derived from the first monomer, and comprises optionally a component derived from the second monomer and/or a component derived from the crosslinking agent The content of each component in the composition can be roughly calculated from the amount charged for the graft polymerization. More precisely, the content of each component can be calculated by determining the reaction rate of each component by the following method. Also, the content of each component can be calculated from the integral ratio by NMR of the composition obtained.
The reaction rate of polyvinyl alcohol can be obtained by the following method. First, the concentration of PVA in the raw material solution is determined by absorbance. Next, a polymerization reaction is carried out to obtain a polymerization reaction liquid, and 50 g of the resulting polymerization reaction liquid is centrifuged at 3000 G for 30 minutes to obtain a supernatant. PVA concentration is determined by measuring the absorbance in the supernatant. The reaction rate (%) of PVA is determined by { 1-(Concentration of PVA in supernatant)/(Concentration of PVA at the time of charging) } $\times$ 100.
The reaction rate of the first monomer, second monomer, and crosslinking agent can be obtained by the following method. After a completion of the polymerization, methanol precipitation is performed, the dried product is dissolved in heavy DMSO, and $^1$H-NMR is measured. From the intensity of the signals corresponding to PVA, the first monomer, the second monomer and the crosslinking agent in the obtained spectrum, the composition of each component is calculated with reference to PVA. Comparing the composition calculated from NMR with the composition of each component at the time of charging, each reaction rate is calculated. Here, the reaction rate indicates how much of the first monomer, second monomer, and crosslinking agent are contained in the composition among the charged first monomer, second monomer, and crosslinking agent.

(Graft Rate)

When the graft copolymer is produced (during the graft copolymerization), a free polymer including at least one of the first monomer, second monomer and crosslinking agent may be produced. Therefore, the calculation of the graft ratio requires a step of separating the free polymers from the graft copolymer.
The free polymer dissolves in dimethylformamide (hereinafter, it may be abbreviated as DMF), but PVA and the graft copolymer are not dissolved in DMF. Using the difference in solubility, the free polymers can be separated by an operation such as centrifugation.
The graft ratio is calculated by the following formula (2).

$$[(G - F)/(G \times (100 - H)/100)] \times 100 \qquad (2)$$

F: Mass (g) of the component dissolved in DMF
G: Mass (g) of the composition used in the test
H: Total content (% by mass) of the first monomer unit and the second monomer unit in the composition

(Molecular Weight of Free Polymers other than Stem Polymer)

1.00 g of the composition was weighed and added to 50 cc of special grade DMF (manufactured by KOKUSAN CHEMICAL Co.,Ltd) and the mixture was stirred at 80°C for 24 hours at 1000 rpm. Next, the mixture was centrifuged for 30 minutes at a rotational speed of 10,000 rpm with a centrifuge (model: H2000B, rotor: H) manufactured by Kokusan Co., Ltd. After the filtrate (DMF soluble content) is carefully separated, the filtrate is added to 1000 ml of methanol to obtain a precipitate. The precipitate is vacuum-dried at 80°C for 24 hours, and the weight average molecular weight in terms of polystyrene equivalent is determined by GPC. The GPC measurement can be performed under the following conditions, for example.

Column: two of GPC LF-804, φ8.0 $\times$ 300 mm (manufactured by Showa Denko KK) are connected in series
Column Temperature: 40°C
Solvent: 20 mM LiBr/DMF

1-11. Method for Producing Composition Containing Graft Copolymer

The method for producing the composition including the graft copolymer according to one embodiment of the

present invention is not particularly limited. The method of producing the composition according to one embodiment of the present invention preferably includes a graft copolymerization step in which a raw material containing at least polyvinyl alcohol and the first monomer is graft copolymerized. That is, the composition according to one embodiment of the present invention is preferably obtained by the method for producing the composition including a graft copolymerization step in which a raw material including at least polyvinyl alcohol and the first monomer is graft copolymerized. The method for producing the composition according to one embodiment of the present invention further preferably comprises a vinyl acetate polymerization step of polymerizing vinyl acetate to obtain polyvinyl acetate, and a saponification step of saponifying the obtained polyvinyl acetate to obtain polyvinyl alcohol.

[Method for Producing Polyvinyl Alcohol (PVA)]

As the method of polymerizing polyvinyl acetate, any known method such as a bulk polymerization or a solution polymerization can be used.

Examples of an initiator used for the polymerization of polyvinyl acetate include azobased initiators such as azobisisobutyronitrile, and organic peroxides such as benzoyl peroxide and bis (4-t-butylcyclohexyl) peroxydicarbonate.

The saponification reaction of polyvinyl acetate can be performed, for example, by a method of saponifying in an organic solvent in the presence of a saponification catalyst.

Examples of the organic solvent include methanol, ethanol, propanol, ethylene glycol, methyl acetate, ethyl acetate, acetone, methyl ethyl ketone, benzene, toluene and the like. One or more of these may be used alone or in combination. Among these, methanol is preferable.

Examples of the saponification catalyst include basic catalysts such as sodium hydroxide, potassium hydroxide and sodium alkoxide, and acidic catalysts such as sulfuric acid and hydrochloric acid. Among these, sodium hydroxide is preferable from the viewpoint of the saponification rate.

By adjusting the kind and amount of the initiator and the temperature and time during polymerization, the polymerization degree of polyvinyl alcohol can be controlled. By adjusting the kind and amount of the saponification catalyst and the temperature and time during saponification can be controlled, the saponification degree of polyvinyl alcohol can be control. The polymerization degree and the saponification degree of polyvinyl alcohol are preferably adjusted within the ranges described above.

[Method for Producing Composition]

The method of producing the composition according to one embodiment of the present invention preferably includes a graft copolymerization step in which a raw material containing at least polyvinyl alcohol and the first monomer is graft copolymerized. The raw material containing at least polyvinyl alcohol and the first monomer may further include the crosslinking agent. Moreover, the raw material containing at least polyvinyl alcohol and the first monomer may further include the second monomer.

In the method of producing the composition according to one embodiment of the present invention, by adjusting the kind and amount of the raw materials used and the polymerization conditions in the graft copolymerization, the gel fraction can be adjusted within the above range.

The polyvinyl alcohol used in the graft copolymerization preferably has the above polymerization degree and saponification degree, and a first monomer, second monomer, and crosslinking agent used in graft copolymerization are preferably the above kinds of the first monomer, second monomer, and crosslinking agent.

The blending amount in the graft copolymerization is preferably adjusted so that the content of each component in the composition obtained by the graft copolymerization satisfies the requirements for the content of each component in the composition described above. For example, the raw material to be used in the graft copolymerization preferably includes 0.2 to 10 parts by mass, more preferably 0.5 to 8 parts by mass, even more preferably 1 to 5 parts by mass, of a crosslinking agent with respect to 100 parts by mass of the raw material to be used in the graft copolymerization. The content of the crosslinking agent in the raw material used in the graft copolymerization is 0.2, 0.5, 1, 2, 3, 4, 5, 6, 7, 8, 9, 10 and may be in the range between the two values exemplified herein.

Examples of a method for graft-copolymerizing a monomer with polyvinyl alcohol include a solution polymerization method. Examples of the solvent used for the method include water, dimethyl sulfoxide, N-methylpyrrolidone, and the like.

Peroxides are preferable as an initiator for the graft copolymerization. Examples of the peroxide include organic peroxides such as benzoyl peroxide, and inorganic peroxides. Among the peroxides, inorganic peroxides are preferable. As the inorganic peroxide, potassium persulfate, ammonium persulfate, and the like can be used. Among inorganic peroxides, ammonium persulfate is preferable.

The graft copolymer according to one embodiment of the present invention can be used by dissolving in a solvent. Examples of the solvent include dimethyl sulfoxide, N-methylpyrrolidone, and the like. The composition and a

slurry for a positive electrode described later may contain the solvent.

1-12. Other Component

The composition according to one embodiment of the present invention may contain other components such as a resin or the like as long as the effects of the present invention are not impaired. Examples of the resin include fluorine-based resins such as polyvinylidene fluoride (PVDF) and polytetrafluoroethylene, a styrene-butadiene copolymer (styrene butadiene rubber and the like), and an acrylic copolymer. Among these, a fluorine-based resin, particularly polyvinylidene fluoride, is preferable from the viewpoint of stability.

2. Slurry for Positive Electrode

A slurry for a positive electrode according to one embodiment of the present invention comprises the above composition and is excellent in stability. In addition, the slurry for the positive electrode according to one embodiment of the present invention includes the above-mentioned composition, and a positive electrode having excellent rate property can be produced by the slurry. The slurry for the positive electrode may contain the composition and a conductive auxiliary agent and may contain the composition, positive electrode active materials, and a conductive auxiliary agent.
The slurry for the positive electrode according to one embodiment of the present invention preferably has a solid content of the composition for the positive electrode (binder) of 0.1 to 20% by mass and more preferably 1 to 10% by mass, with respect to the total solid content in the slurry for the positive electrode.

3. Lithium Ion Secondary Battery

The battery comprising the positive electrode according to one embodiment of the present invention is preferably a secondary battery. The secondary battery is preferably one or more selected from a lithium ion secondary battery, a sodium ion secondary battery, a magnesium ion secondary battery, and a potassium ion secondary battery. It is more preferably a lithium ion secondary battery.
The positive electrode and the lithium ion secondary battery comprising the positive electrode according to one embodiment of the present invention can be produced using the slurry for the positive electrode including the above-mentioned composition. Preferably, the lithium ion secondary battery comprises the above-mentioned positive electrode, a negative electrode, a separator, and an electrolytic solution (hereinafter it may be referred to as electrolytes and electrolytic solution).

[Positive Electrode]

The positive electrode according to one embodiment of the present invention is produced by applying the slurry for the positive electrode containing the composition, the conductive auxiliary agent, and the positive electrode active material, which is used as needed, onto a current collector such as an aluminum foil, then heating to remove the solvent contained in the slurry, and further pressurizing the current collector and the electrode mixture layer with a roll press or the like to bring them into close contact with each other. That is, a positive electrode having a metal foil and a coating film of the slurry for a positive electrode formed on the metal foil can be obtained.

[Conductive Auxiliary Agent]

The conductive auxiliary agent is preferably at least one selected from the group consisting of (i) fibrous carbon, (ii) carbon black, and (iii) a carbon composite in which fibrous carbon and carbon black are interconnected. Examples of the fibrous carbon include vapor growth carbon fibers, carbon nanotubes, carbon nanofibers, and the like. Examples of the carbon black include acetylene black, furnace black, Ketjenblack (registered trademark), and the like. These conductive auxiliary agents may be used alone or in combination of two or more. Among these, at least one selected from acetylene black, carbon nanotubes, and carbon nanofibers is preferable from the viewpoint of high effect of improving the dispersibility of the conductive auxiliary agent.
The slurry for the positive electrode according to one embodiment of the present invention preferably has a solid content of the conductive auxiliary agent of 0.01 to 20% by mass with respect to the total solid content in the slurry for the positive electrode, and it is more preferably 0.1 to 10% by mass.

[Positive Electrode Active Material]

A positive electrode active material may be used as needed. The positive electrode active material is preferably

a positive electrode active material capable of reversibly absorbing and releasing cations. The positive electrode active material is preferably a lithium-containing composite oxide containing Mn or lithium-containing polyanionic compound having a volume resistivity of $1\times10^4$ Ω·cm or more. Examples include $LiCoO_2$, $LiMn_2O_4$, $LiNiO_2$, $LiMPO_4$, $Li_2MSiO_4$, $LiNi_XMn_{(2-X)}O_4$, $Li(Co_XNi_YMn_Z)O_2$, $Li(Ni_XCo_YAl_Z)O_2$, $XLi_2MnO_3$-(1-X)$LiMO_2$ and the like. Preferably, X in LiNiXMn (2-X) $O_4$ satisfies 0<X<2. Preferably, X, Y, and Z in $Li(Co_XNi_yMn_z)O_2$ and Li $(Ni_XCo_yAl_z)O_2$ satisfy X+Y+Z=1 and 0<X<1, 0<y<1, 0<z<1. Preferably, X in $XLi_2MnO_3$-(1-X)$LiMO_2$ satisfies 0<X<1. Preferably, M in $LiMPO_4$, $Li_2MSiO_4$, and $XLi_2MnO_3$-(1-X)$LiMO_2$ are preferably one or more of the elements selected from Fe, Co, Ni, and Mn.

The positive electrode active material is preferably at least one selected from the group consisting of: $LiNi_XMn_{(2-X)}O_4$ (0<X<2); $Li(Co_XNi_YMn_Z)O_2$ (0<X<1, 0<Y<1, 0<Z<1, and X+Y+Z=1); and $Li(Ni_XCo_YAl_Z)O_2$ (0<X<1, 0<Y<1, 0<Z<1, and X+Y+Z=1), and more preferably one selected from the group consisting of: $LiNi_XMn_{(2-X)}O_4$ (0<X<2); $Li(Co_XNi_YMn_Z)O_2$ (0<X<1, 0<Y<1, 0<Z<1, and X+Y+Z=1).

Preferably, the slurry for the positive electrode according to one embodiment of the present invention preferably has the solid content of the positive electrode active material of 50 to 99.8% by mass with respect to the total solid content of in the slurry for the positive electrode, more preferably 80 to 99.5% by mass, and most preferably 95 to 99.0% by mass.

[Negative Electrode]

The negative electrode used in the lithium ion secondary battery according to one embodiment of the present invention is not particularly limited, and it can be produced using a slurry for a negative electrode containing a negative electrode active material. This negative electrode can be produced using, for example, a negative electrode metal foil and the slurry for a negative electrode provided on the metal foil. The slurry for a negative electrode preferably includes a negative electrode binder (a composition for a negative electrode), a negative electrode active material, and the above-described conductive auxiliary agent. The negative electrode binder is not particularly limited. Examples of the negative electrode binder include polyvinylidene fluoride, polytetrafluoroethylene, a styrene-butadiene copolymer (a styrene-butadiene rubber and the like), an acrylic copolymer, and the like. The negative electrode binder is preferably a fluorine-based resin. As the fluorine-based resin, one or more of the group consisting of polyvinylidene fluoride and polytetrafluoroethylene is more preferable, and polyvinylidene fluoride is most preferable.

Examples of the negative electrode active material used for the negative electrode include carbon materials such as graphite, polyacene, carbon nanotubes, and carbon nanofibers, alloy materials such as tin and silicon, and oxidation such as tin oxide, silicon oxide, lithium titanate, and the like. These can be used alone, or two or more of these can be used in combination.

The metal foil for the negative electrode is preferably foil-like copper, and the thickness of the foil is preferably 5 to 30 μm from the viewpoint of workability. The negative electrode can be produced using the slurry for the negative electrode and the metal foil for the negative electrode by the method according to the above-mentioned manufacturing method for the positive electrode.

[Separator]

The separator is not particularly limited as long as it has sufficient strength. The examples of the separator include an electrical insulating porous membrane, a mesh, a nonwoven fabric, fiber, and the like. In particular, it is preferable to use a material that has low resistance to ion migration of the electrolytic solution and excellent in solution holding. The material is not particularly limited, and examples thereof include inorganic fibers such as glass fibers or organic fibers, a synthetic resin such as olefins, such as polyethylene and polypropylene, polyester, polytetrafluoroethylene, and polyflon and layered composites thereof. From the viewpoints of binding property and stability, olefins or layered composites thereof is preferable. As the olefin, one or more of the group consisting of polyethylene and polypropylene are preferable.

[Electrolyte]

As the electrolyte, any known lithium salt can be used. Examples of the electrolyte include $LiClO_4$, $LiBF_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, LiCl, LiBr, LiI, $LiB(C_2H_5)_4$, $LiCF_3SO_3$, $LiCH_3SO_3$, $LiCF_3SO_3$, $LiC_4F_9SO_3$, $LiN(CF_3SO_2)_2$, $LiN(C_2F_5SO_2)_2$, $LiC(CF_3SO_2)_3$, lithium fatty acid carboxylate, and the like.

[Electrolytic Solution]

The electrolytic solution in which the electrolyte dissolves is not particularly limited. Examples of the electrolytic solution include: carbonates such as propylene carbonate, ethylene carbonate, dimethyl carbonate, diethyl carbonate

and methyl ethyl carbonate; lactones such as γ-butyrolactone; ethers such as trimethoxymethane, 1,2-dimethoxyethane, diethyl ether, 2-ethoxyethane, tetrahydrofuran and 2-methyltetrahydrofuran; sulfoxides such as dimethyl sulfoxide; oxolanes such as 1,3-dioxolane and 4-methyl-1,3-dioxolane; nitrogen-containing compounds such as acetonitrile, nitromethane and N-methyl-2-pyrrolidone; esters such as methyl formate, methyl acetate, ethyl acetate, butyl acetate, methyl propionate, ethyl propionate and phosphoric acid triester; inorganic acid esters such as sulfuric acid ester, nitric acid ester and hydrochloric acid ester; amides such as dimethylformamide and dimethylacetamide; glymes such as diglyme, triglyme and tetraglyme; ketones such as acetone, diethyl ketone, methyl ethyl ketone and methyl isobutyl ketone; sulfolanes such as sulfolane; oxazolidinones such as 3-methyl-2-oxazolidinone; sultone such as 1,3-propane sultone, 4-butane sultone and naphtha sultone; and the like. One or more selected from these electrolytic solutions can be used alone or in combination. The electrolytic solution preferably contains carbonates, more preferably ethylene carbonate or diethyl carbonate.

Among the above electrolytes and electrolytic solutions, an electrolytic solution obtained by dissolving $LiPF_6$ in carbonates is preferable, and an electrolytic solution obtained by dissolving $LiPF_6$ in a mixed solution containing ethylene carbonate and diethyl carbonate is more preferable, and an electrolytic solution obtained by dissolving $LiPF_6$ in a solution obtained by mixing ethylene carbonate and diethyl carbonate at a volume ratio of 1:2 is even more preferable. The concentration of the electrolyte in the solution varies depending on the electrode and electrolytic solution used, and is preferably 0.5 to 3 mol/L.

The application of the lithium ion secondary battery of an embodiment of the present invention is not particularly limited. It may be used in a wide range of fields and examples of the application include a digital camera, a video camera, a portable audio player, a portable AV device such as a portable LCD TV, a mobile information terminal such as a notebook computer, a smartphone, or a mobile PC, a portable game device, an electric tool, an electric bicycle, a hybrid vehicle, an electric vehicle, and a power storage system.

## EXAMPLES

The present invention will be described in more detail with reference to examples below. These are exemplary and do not limit the present invention. Data are shown in Tables 1.

[Example 1]

As the PVA, PVA (B-17) manufactured by Denka Company Limited was used. Table 1 shows the average polymerization degree and saponification degree of the obtained PVA.

The average polymerization degree and saponification degree of PVA were measured based on JIS K 6726.

<Preparation of Composition>

After 1804 parts by mass of pure water were charged into a reaction vessel and deoxidized by bubbling nitrogen gas, 100 parts by mass of partially saponified PVA (saponification degree 85.6%, polymerization degree 1700) was charged at room temperature and heated to 90°C to be dissolved. The reaction vessel is adjusted to 60°C, and 170 parts by mass of a 10% ammonium persulfate aqueous solution, which was separately deoxidized by bubbling nitrogen gas, was added all at once. A mixture of 96 parts by mass of acrylonitrile and 8 parts by mass of a crosslinking agent, which was oligoethylene glycol diacrylate (represented by general formula (B), where the ethylene glycol repeating number n=9, and $R^{21}$ and $R^{22}$ are hydrogen) (manufactured by SHIN-NAKAMURA CHEMICAL Co., Ltd., product name: A-400) was added over 5 hours and polymerization was performed. 100 parts by mass of the resulting polymerization liquid was added to 300 parts by mass of methanol, and the precipitate was filtered under reduced pressure and dried at 40°C for 12 hours to obtain a resin composition.

Table 1 shows the component and the like of the composition containing the obtained graft copolymer.

<Composition ratio>

For the obtained composition, the composition ratio of each component was calculated based on the reaction rate of Example 2 described later. This composition ratio includes a free polymer (homoPAN), which is a homopolymer of the first monomer. Table 1 shows the results.

<Evaluation Method>

(DMSO Insoluble Content (Gel Fraction))

1 g of the obtained composition and 300 ml of DMSO were added to a 500 ml beaker and stirred at 60°C for 15 hours. After that, the obtained mixture was filtered through a filter paper, which is a No. 5C filter paper specified in JIS P 3801, with a Kiriyama funnel. Here, the residue remaining on the filter paper was the insoluble portion (gel fraction), and the filtrate was the soluble portion. The insoluble portion (gel content) was vacuum-dried at 100°C for 24 hours and weighed. The gel fraction was calculated by following formula: the gel fraction (%) = A×100/1, where the insoluble content is A g.

(Graft Rate)

1.00 g of the obtained composition including the graft copolymer was weighed and added to 50 cc of special grade DMF (manufactured by KOKUSAN CHEMICAL Co.,Ltd) and the mixture was stirred at 80°C for 24 hours at 1000 rpm. Next, the mixture was centrifuged for 30 minutes at a rotational speed of 10,000 rpm with a centrifuge (model: H2000B, rotor: H) manufactured by Kokusan Co., Ltd. After the filtrate (DMF soluble content) was carefully separated, the DMF insoluble content was vacuum-dried at 100°C for 24 hours. The graft ratio was calculated by the following formula.

$$[(G - F)/(G \times (100 - H)/100)] \times 100 \qquad (3)$$

F: Mass (g) of the component dissolved in DMF
G: Mass (g) of the composition used in the test
H: Total content (% by mass) of the first monomer unit and the second monomer unit in the composition

(Swelling Rate of Composition (25°C, 15 days))

The obtained composition was dissolved in NMP to prepare a 4 mass% NMP solution. 5.6 g of the obtained solution was added to a Petri dish of PTFE (tetrafluoroethylene) and dried at 105°C for 8 hours with an air drier to obtain a film having a thickness of 250 μm. A central portion of the obtained film was cut into a 5 mm square to be used as a test film. The obtained test film was weighed, and then immersed in an electrolytic solution in which ethylene carbonate (EC) and diethyl carbonate (DEC) were mixed at a volume ratio of 1:2. After the test film standed at 25°C for 15 days, the liquid on the surface of the film was wiped off, and the mass after immersion was measured. From the change in mass before and after immersion, the swelling rate was calculated using the following formula. The swelling rate was calculated from the following formula, where WA (g) is the mass before immersion and WB (g) is the mass after immersion.

$$\text{Swelling rate } (25°\text{C, 15 days}) (\%) = WB \times 100/WA \qquad \text{Formula (4)}$$

WA: Mass before immersion (g)
WB: Mass after immersion (g)

(Swelling Rate of Composition (60°C, 48 hours))

The swelling rate when immersed in the electrolytic solution at 60°C for 48 hours was determined in the same manner as in the swelling rate of composition (25°C, 15 days) except that the immersion conditions in the electrolytic solution were set to 60°C for 48 hours.

<Preparation of slurry>

1 mass part of the obtained binder, 2 mass parts of acetylene black (manufactured by Denka Company Limited, DENKA BLACK (registered trademark), "Li435"), and 97 parts by mass of NMC532 ($LiNi_{0.5}Mn_{0.3}Co_{0.2}O_2$, manufactured by Umicore S.A., TX-10) were added to N-methyl-2-pyrrolidone (hereafter abbreviated as NMP) in 66 mass parts to make a slurry for forming the positive electrode.

<Preparation of Positive Electrode>

The prepared slurry for the positive electrode was applied to an aluminum foil having a thickness of 20 μm by an automatic coating machine so that the coating film has 140 mg/$cm^2$ and was preliminarily dried at 105°C for 30 minutes. Next, it was pressed with a roll press machine at a linear pressure of 0.1 to 3.0 ton/cm so that the positive electrode plate has an average thickness of 75 μm. Furthermore, a positive electrode plate was punched into a circle with a diameter of 13 mm. In order to completely remove a volatile component such as a residual solvent and adsorbed moisture, the positive electrode was dried at 170°C for 6 hours to obtain the positive electrode. The electrode areal density was 29.0 mg/$cm^2$ and the volume density was 3.4 g/$cm^3$.

<Production of Lithium Ion Secondary Battery>

A 2032-type coin cell was produced using the obtained positive electrode and metallic lithium as a counter electrode. As an electrolyte, an electrolytic solution (ethylene carbonate/diethyl carbonate=1/2 (volume ratio) mixed solution), in which $LiPF_6$ was dissolved at a concentration of 1 mol/L, was used. A non-woven fabric made of olefin fiber with a diameter of 15 mm was used as a separator for electrically isolating them. The battery performance of the produced lithium ion secondary battery was evaluated by the following method.

<Battery Property>

The battery property of the obtained battery was evaluated under the following measurement conditions.

Charging condition: CC-CV method, CC current = 0.2C, CV voltage = 4.2V, cutoff current = 1/20C
Discharge condition: CC method, CC current = 0.2, 0.5, 1.0, 2.0, 2.8 C, cutoff voltage = 3.0V
Temperature condition: 25°C

After the first charge of the battery, it was confirmed that the charge-discharge efficiency is close to 100%. Then, the discharge capacity when performing constant current discharge to 3.0 V at a current density of 0.20 mA/$cm^2$ was measured. The capacity density (mAh/g) divided by the amount of the positive electrode active material was calculated. A current value capable of charging and discharging this capacity (mAh) in one hour was defined as "1C".

<DC Resistance>

Each current of 0.2, 0.4, 0.6, 0.8, 1.0 mmA was applied to an electrode with a diameter of 13 mm and a thickness of 75 μm in the same manner as the positive electrode, and the voltage was read after 10 seconds. Then, a resistance value was obtained from Ohm's law. A volume resistivity (Ω·cm) was measured by two-terminal method. The volume resistivity was calculated by the following formula.

$$\text{Volume resistivity } (\Omega\cdot \text{cm}) = (V\times S)/(I\times L) \qquad \text{formula (3)}$$

V: Potential difference
S: Cross-sectional area
I: Current value (A)
L: Electrode thickness (cm)

<High-temperature Storage Property>

The obtained lithium secondary battery was charged to 4.3 V at a constant current of 0.2 C (fully charged). This was placed in a 60°C environmental tester and stored for 30 days. After 30 days, the battery was discharged to 3.0 V at a constant current of 0.2 C at 25°C, and high-temperature storage property was obtained using the following formula.

$$\text{(High-temperature storage property (\%))} = [\text{(Discharge capacity after storage)/(Charge capacity before storage)}] \times 100$$

In addition, the obtained high-temperature storage property was compared with the high-temperature storage

property of a lithium secondary battery using PVDF as a positive electrode binder according to Reference Example 1, which will be described later, and evaluated according to the following criteria. Table 1 shows the results.

A: High-temperature storage property was equivalent to those of the lithium secondary battery using PVDF as the positive electrode binder
B: High-temperature storage property was lower than those of the lithium secondary battery using PVDF as the positive electrode binder, and the difference was within 5%.
C: High-temperature storage property was lower than those of lithium secondary battery using PVDF as the positive electrode binder, and the difference was more than 5% and within 15%.

[Example 2]

<Preparation of Polyvinyl Alcohol (PVA)>

As the PVA, PVA (B-24) manufactured by Denka Company Limited was used. Table 1 shows the average polymerization degree and saponification degree of the obtained PVA.

<Preparation of Composition>

A composition was obtained in the same manner as in Example 1, except that the blending amounts were as shown in Table 1. Table 1 shows the results.

<Reaction rate and Composition Ratio>

For the obtained composition, the reaction rate of each raw material and the composition ratio of each component were calculated.

The reaction rate of polyvinyl alcohol was obtained by the following method. First, the concentration of PVA in the raw material solution was determined by absorbance. Next, a polymerization reaction was carried out to obtain a polymerization reaction liquid, and 50 g of the resulting polymerization reaction liquid was centrifuged at 3000 G for 30 minutes to obtain a supernatant. PVA concentration was determined by measuring the absorbance in the supernatant. The reaction rate of PVA is determined by { 1-(Concentration of PVA in supernatant)/(Concentration of PVA at the time of charging)} $\times$ 100. The reaction rate of PVA was 93%

The reaction rate of the first monomer and crosslinking agent were obtained by the following method. After a completion of the polymerization, methanol precipitation was performed, the dried product was dissolved in heavy DMSO, and $^1$H-NMR was measured. From the intensity of the signals corresponding to PVA, the first monomer and the crosslinking agent in the obtained spectrum, the composition of each component was calculated with reference to PVA. A signal derived from PVA is observed at 1 to 1.7 ppm, a signal derived from PAN and vinyl acetate is observed at 1.7 to 2.3 ppm, a signal derived from PAN is observed at 3 to 3.2 ppm, and a signal derived from the crosslinking agent is observed at 3.5 to 3.7 ppm. Comparing the composition calculated from NMR with the composition of each component at the time of charging, each reaction rate was calculated. Here, the reaction rate indicates how much of the first monomer and crosslinking agent are contained in the composition among the charged first monomer and crosslinking agent. The reaction rate of the first monomer was 98%, and the reaction rate of the crosslinking agent was 100%.

Also, the composition ratio of each component of the composition according to Example 2 was calculated from the reaction rate. The content of the polyvinyl alcohol structure was 47.7 parts by mass, the content of the first monomer unit was 48.2 parts by mass, and the content of the structure derived from the crosslinking agent was 4.2 parts by mass with respect to 100 parts by mass of the composition. In addition, this composition ratio includes a free polymer that is a homopolymer of the first monomer.

[Comparative Examples 1]

<Preparation of Polyvinyl Alcohol (PVA)>

As the PVA, PVA (F-12) manufactured by Denka Company Limited was used. Table 1 shows the average polymerization degree and saponification degree of PVA.

<Preparation of Composition>

A composition was obtained in the same manner as in Example 1, except that the blending amounts of acrylonitrile added to PVA were as shown in Table 1.

<Reaction Rate and Composition Ratio>

The reaction rate of each raw material and the composition ratio of each component were calculated in the same manner as in Example 2. Table 1 shows the results.

[Reference Example 1]

A polyvinylidene fluoride resin (HSV900: manufactured by Arkema S.A.) was used as the positive electrode composition. Table 1 shows the results.

The abbreviations used in the tables below represent the following compounds. A monomer unit refers to the monomer from which the monomer unit is derived.

AN: acrylonitrile
OEG: oligoethylene glycol diacrylate

[Table 1]

| Table 1 | | | Example | | Comparative Example | Reference Example |
|---|---|---|---|---|---|---|
| | | | 1 | 2 | 1 | 1 |
| polymerization degree of PVA | | | 1700 | 2400 | 1200 | - |
| saponification degree of PVA mol% | | | 85.6 | 85.6 | 99.0 | - |
| blending amount (% by mass) | PVA | | 49 | 49 | 30 | - |
| | first monomer unit | AN | 47 | 47 | 70 | - |
| | crosslinking agent | OEG | 4 | 4 | 0 | - |
| | PVDF | | - | - | - | 100 |
| reaction rate | PVA | | - | 93 | 73 | - |
| | first monomer unit | AN | - | 98 | 91 | - |
| | crosslinking agent | OEG | - | 100 | - | - |
| | PVDF | | - | - | - | - |
| composition ratio (including homoPAN) | PVA | | 47.7 | 47.7 | 25.6 | - |
| | first monomer unit | AN | 48.2 | 48.2 | 74.4 | - |
| | crosslinking agent | OEG | 4.2 | 4.2 | - | - |
| | PVDF | | - | - | - | 100 |
| swelling rate of composition(%)(25°C, 15days) | | | 114 | 114 | 104 | 117 |
| swelling rate of composition(%)(60°C, 48hours) | | | 120 | 124 | - | 126 |
| gel fraction(%) | | | 89.5 | 68.8 | 2.4 | 0.0 |
| graft rate(%) | | | - | 165 | 240 | - |

(continued)

| Table 1 | | Example | | Comparative Example | Reference Example |
|---|---|---|---|---|---|
| | | 1 | 2 | 1 | 1 |
| evaluation | 1 C rate mAh/g(%) | 92.0 | 97.1 | 45.7 | 84.8 |
| | DC resistance(10sec)(Ω) | 15.0 | 14.0 | 16.0 | 15.0 |
| | high-temperature storage property | A | A | C | A |

**Claims**

**1.** A composition comprising a graft copolymer, wherein:

the graft copolymer has a stem polymer and a branch polymer;
the stem polymer contains a polyvinyl alcohol structure,
the branch polymer contains a first monomer unit containing a (meth)acrylonitrile monomer unit and/or a (meth)acrylic acid monomer;
the composition has a gel fraction of 30% or more;
the gel fraction is represented by following formula: the gel fraction % = A × 100/1;
A g is an insoluble content left on a filter pater when 1 g of the composition is added to 300 ml of dimethyl sulfoxide to obtain a mixture and the mixture is stirred at 60°C for 15 hours and then filtered through the filter paper, which is a No. 5C filter paper as specified in JIS P 3801.

**2.** The composition of Claim1, wherein:

the composition further comprises a free polymer;
the free polymer does not have a covalent bond with the graft copolymer; and
the free polymer includes at least a polymer containing a polyvinyl alcohol structure and/or a polymer containing the first monomer unit.

**3.** The composition of Claim 1 or 2, wherein the graft copolymer further includes a crosslinked portion derived from a crosslinking agent.

**4.** The composition of Claim 3, wherein the crosslinked portion includes an ether structure.

**5.** The composition of any one of Claim 3 or 4, wherein the composition contains 0.2 to 10 parts by mass of a structure derived from the crosslinking agent with respect to 100 parts by mass of the composition.

**6.** The composition of any one of Claims 1 to 5, wherein:

the composition has a swelling rate to an electrolytic solution of 90 to 230%;
the swelling rate is a swelling rate after immersing the composition in the electrolytic solution at 25°C for 15 days; and
the electrolytic solution is obtained by mixing ethylene carbonate and diethyl carbonate at a volume ratio of 1:2.

**7.** The composition of any one of Claims 1 to 6, wherein a graft ratio of the graft copolymer is 40 to 3000%.

**8.** The composition of any one of Claims 1 to 7, wherein a saponification degree of the polyvinyl alcohol structure in the composition is 60 to 100 mol%.

**9.** The composition of any one of Claims 1 to 8, wherein an average polymerization degree of the polyvinyl alcohol structure in the composition is 300 to 4000.

**10.** A composition for a positive electrode comprising the composition of any one of Claims 1 to 9.

**11.** A slurry for the positive electrode comprising the composition for the positive electrode of Claim 10, a positive electrode active material, and a conductive auxiliary agent.

**12.** The slurry for the positive electrode of Claim 11, wherein a solid content of the composition for the positive electrode is 1 to 20% by mass with respect to 100% by mass of a total solid content in the slurry for the positive electrode.

**13.** The slurry for the positive electrode of Claim 11 or 12, wherein the conductive auxiliary agent is at least one selected from a group consisting of fibrous carbon, carbon black, and carbon composite in which fibrous carbon and carbon black are interconnected.

**14.** A positive electrode comprising a metal foil and a coating film of the slurry for the positive electrode of any one of Claims 11 to 13 formed on the metal foil.

**15.** A secondary battery comprising the positive electrode of Claim 14, wherein the secondary battery is at least one selected from a lithium ion secondary battery, a sodium ion secondary battery, a magnesium ion secondary battery, and a potassium ion secondary battery.

**16.** The secondary battery of Claim 15, wherein the positive electrode active material contains at least one selected from $LiNi_XMn_{(2-X)}O_4$ ($0<X<2$); $Li(Co_XNi_YMn_Z)O_2$ ($0<X<1$, $0<Y<1$, $0<Z<1$, and $X+Y+Z=1$); and $Li(Ni_XCo_YAl_Z)O_2$ ($0<X<1$, $0<Y<1$, $0<Z<1$, and $X+Y+Z=1$) and the secondary battery is a lithium ion secondary battery.

**INTERNATIONAL SEARCH REPORT**

International application No.
**PCT/JP2021/029650**

**A. CLASSIFICATION OF SUBJECT MATTER**

***C08F 261/04***(2006.01)i; ***C08L 29/04***(2006.01)i; ***C08L 33/02***(2006.01)i; ***C08L 33/20***(2006.01)i; ***C08L 51/06***(2006.01)i; ***H01M 4/13***(2010.01)i; ***H01M 4/131***(2010.01)i; ***H01M 4/139***(2010.01)i; ***H01M 4/1391***(2010.01)i; ***H01M 4/505***(2010.01)i; ***H01M 4/525***(2010.01)i; ***H01M 4/62***(2006.01)i; ***H01M 4/64***(2006.01)i; ***H01M 4/66***(2006.01)i
FI: C08L51/06; H01M4/62 Z; H01M4/139; H01M4/13; H01M4/131; H01M4/1391; H01M4/505; H01M4/525; H01M4/66 A; H01M4/64 A; C08F261/04; C08L29/04 C; C08L33/20; C08L33/02

According to International Patent Classification (IPC) or to both national classification and IPC

**B. FIELDS SEARCHED**

Minimum documentation searched (classification system followed by classification symbols)

C08L51/06; C08F261/04; C08L29/04; C08L33/02; C08L33/20; H01M4/13; H01M4/131; H01M4/139; H01M4/1391; H01M4/505; H01M4/525; H01M4/62; H01M4/64; H01M4/66

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2000-095823 A (OSAKA ORGANIC CHEMICAL INDUSTRY LTD.) 04 April 2000 (2000-04-04)<br>claims, paragraphs [0016], [0017], [0028]-[0030], example 4 | 1-9 |
| X | JP 06-506252 A (THE DOW CHEMICAL CO.) 14 July 1994 (1994-07-14)<br>claims, examples 13, 14 | 1-9 |
| A | WO 2016/024525 A1 (DENKI KAGAKU KOGYO KK) 18 February 2016 (2016-02-18) | 1-16 |
| A | WO 2017/154949 A1 (DENKA CO., LTD.) 14 September 2017 (2017-09-14) | 1-16 |
| A | JP 2010-521798 A (CHENGDU ZHONGKE LAIFANG POWER SCIENCE & TECHNOLOGY CO., LTD.) 24 June 2010 (2010-06-24) | 1-16 |
| A | WO 2018/230599 A1 (DENKA CO., LTD.) 20 December 2018 (2018-12-20) | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 September 2021** | **05 October 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/029650**

**C. DOCUMENTS CONSIDERED TO BE RELEVANT**

| Category* | Citation of document, with indication, where appropriate, of the relevant passages | Relevant to claim No. |
|---|---|---|
| A | JP 2001-256980 A (NIPPON ZEON CO.) 21 September 2001 (2001-09-21) | 1-16 |
| A | JP 2013-048043 A (DAINICHISEIKA COLOR & CHEMICALS MANUFACTURING CO., LTD.) 07 March 2013 (2013-03-07) | 1-16 |
| A | JP 2004-227974 A (NIPPON ZEON CO.) 12 August 2004 (2004-08-12) | 1-16 |
| P, A | WO 2020/162503 A1 (DENKA CO., LTD.) 13 August 2020 (2020-08-13) | 1-16 |
| P, A | WO 2020/162505 A1 (DENKA CO., LTD.) 13 August 2020 (2020-08-13) | 1-16 |
| P, A | WO 2020/209260 A1 (DENKA CO., LTD.) 15 October 2020 (2020-10-15) | 1-16 |

Form PCT/ISA/210 (second sheet) (January 2015)

**INTERNATIONAL SEARCH REPORT**
**Information on patent family members**

International application No.
**PCT/JP2021/029650**

| Patent document cited in search report | Publication date (day/month/year) | Patent family member(s) | Publication date (day/month/year) |
|---|---|---|---|
| JP 2000-095823 A | 04 April 2000 | (Family: none) | |
| JP 06-506252 A | 14 July 1994 | WO 1992/016565 A1<br>claims, examples 13, 14<br>EP 516925 A1<br>US 5744564 A | |
| WO 2016/024525 A1 | 18 February 2016 | US 2017/0288218 A1<br>CN 107148692 A | |
| WO 2017/154949 A1 | 14 September 2017 | US 2019/0027756 A1<br>CN 108780893 A<br>KR 10-2018-0120741 A | |
| JP 2010-521798 A | 24 June 2010 | WO 2009/115004 A1<br>CN 101260282 A<br>KR 10-2009-0125800 A | |
| WO 2018/230599 A1 | 20 December 2018 | US 2020/0207898 A1<br>CN 110799557 A<br>KR 10-2020-0018804 A | |
| JP 2001-256980 A | 21 September 2001 | (Family: none) | |
| JP 2013-048043 A | 07 March 2013 | (Family: none) | |
| JP 2004-227974 A | 12 August 2004 | (Family: none) | |
| WO 2020/162503 A1 | 13 August 2020 | (Family: none) | |
| WO 2020/162505 A1 | 13 August 2020 | (Family: none) | |
| WO 2020/209260 A1 | 15 October 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013098123 A
- JP 2013084351 A
- JP H6172452 A
- WO 2015053224 A
- WO 2018230599 A